(19) **Europäisches Patentamt / European Patent Office / Office européen des brevets**

(11) **EP 3 425 339 A1**

(12) **EUROPEAN PATENT APPLICATION**
published in accordance with Art. 153(4) EPC

(43) Date of publication:
**09.01.2019  Bulletin 2019/02**

(21) Application number: **17759633.5**

(22) Date of filing: **13.02.2017**

(51) Int Cl.:
***G01C 21/30*** *(2006.01)*

(86) International application number:
**PCT/JP2017/005165**

(87) International publication number:
**WO 2017/150162 (08.09.2017 Gazette 2017/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority:  **01.03.2016  JP 2016039407**

(71) Applicant: **Ricoh Company, Ltd.
Tokyo 143-8555 (JP)**

(72) Inventor: **MATSUSHITA, Yusuke
Tokyo 143-8555 (JP)**

(74) Representative: **SSM Sandmair
Patentanwälte Rechtsanwalt
Partnerschaft mbB
Joseph-Wild-Straße 20
81829 München (DE)**

(54) **POSITION ESTIMATING DEVICE, POSITION ESTIMATING METHOD AND PROGRAM**

(57)     Disclosed is a position estimation device for estimating position information of the position estimation device itself using detection information detected by a position detector and predetermined map information acquired from a server apparatus connected via a network. The position estimation device includes a priority determiner configured to determine priorities of a plurality of regions, using region information including respective information pieces of the plurality of regions around the position estimation device and one of the detection information and the position information; and a map information acquisition unit configured to acquire the predetermined map information corresponding to at least some of the plurality of regions from the server apparatus in accordance with the priorities determined by the priority determiner.

FIG.7

START

SPECIFY POSITION OF DEVICE ITSELF ⟋S701

ACQUIRE REGION INFORMATION OF
MULTIPLE REGIONS AROUND THE DEVICE ⟋S702

DETERMINE PRIORITIES
OF MULTIPLE REGIONS ⟋S703

ACQUIRE MAP INFORMATION IN
ORDER FROM A HIGHER PRIORITY REGION ⟋S704

COMBINE MAP IMAGES INCLUDED
IN ACQUIRED MAP INFORMATION ⟋S705

PERFORM MAP MATCHING ⟋S706

DELETE UNNECESSARY MAP INFORMATION ⟋S707

END

EP 3 425 339 A1

**Description**

[Technical Field]

The present invention relates to a position estimation device, a position estimation method, and a program.

[Background Art]

A map matching technique is known in the art for correcting position information detected by a GPS (Global Positioning System) or a position detection device such as an inertial navigation device to more accurate position information, based on map information created from structural information such as buildings and passages, etc.
For example, a route matching method is known in which route information is defined by combining node information and link information, and matching is performed on route information (see, e.g., Patent Document 1).

[Related-Art Document]

[Patent Document]

Patent Document 1: Japanese Unexamined Patent Publication No. 2013-200223

[Summary of the Invention]

[Problem to be Solved by Invention]

A position estimation device having a communication function such as a smartphone is enabled to perform map matching using, for example, the latest map information acquired from a server apparatus, without relying on the map information stored in the device. However, such a position estimation device is unable to acquire map information in an area where communication with the server apparatus is unavailable making it difficult for the position estimation device to perform map matching.
In order to handle such a difficulty, according to the technique disclosed in Patent Document 1, map data scheduled to be used for route guidance is determined based on destination information and route information, and the determined map data is transmitted to a position estimation device before the position estimation device reaches a communication unavailable region.
However, the technique disclosed in Patent Document 1 is not applicable to a position estimation device that is configured to estimate a current position of the position estimation device itself without previously defining the destination information and the route information.
An embodiment of the present invention has been made in view of the above problems, and it is an object of the present invention to enable a position estimation device for performing map matching using map information acquired from a server apparatus to continue the map matching regardless of the destination information or the route information when the communication is unavailable.

[Means to Solve the Problem]

According to an aspect of the disclosure, a position estimation device for estimating position information of the position estimation device itself using detected information detected by a position detector and predetermined map information acquired from a server apparatus connected via a network is provided. The position estimation device includes a priority determiner configured to determine priorities of a plurality of regions, using region information including respective information pieces of the plurality of regions around the position estimation device and one of the detection information and the position information; and
a map information acquisition unit configured to acquire the predetermined map information corresponding to at least some of the plurality of regions from the server apparatus in accordance with the priorities determined by the priority determiner.

[Advantage of the Invention]

According to at least one embodiment of the present invention, a position estimation device configured to perform map matching using map information acquired from a server apparatus is enabled to continue map matching regardless of destination information or route information when communication is failing.

According to one embodiment of the present invention, with such a position estimation device configured to perform map matching using map information acquired from a server apparatus, it is possible to continue map matching without relying on destination information or route information even when communication is unavailable.

[Brief Description of Drawings]

FIG. 1 is a diagram illustrating a configuration of a position estimation system according to an embodiment;
FIG. 2 is a diagram illustrating a hardware configuration example of a position information device according to an embodiment;
FIG. 3 is a diagram illustrating a hardware configuration example of a position information server according to an embodiment;
FIG. 4 is a functional configuration diagram of a position estimation system according to a first embodiment;
FIG. 5A is a diagram illustrating an example of application management information;
FIG. 5B is a diagram illustrating an example of region information;
FIG. 5C is a diagram illustrating an example of map information;
FIG. 6A is a diagram illustrating an example of a layout of a region;
FIG. 6B is a diagram illustrating an example of a map image;
FIG. 7 is a flowchart illustrating a position estimation process according to the first embodiment;
FIG. 8 is a flowchart illustrating an example of a priority order determining process according to the first embodiment;
FIG. 9 is a diagram illustrating examples of priorities of respective regions according to the first embodiment;
FIG. 10 is a diagram illustrating a particle filter according to the first embodiment;
FIG. 11 is a flowchart illustrating an example of a map matching process according to the first embodiment;
FIG. 12 is a diagram illustrating the map matching process according to the first embodiment;
FIG. 13 is a functional configuration diagram of a position estimation system according to a second embodiment;
FIG. 14 is a sequence diagram illustrating an example of a map information acquisition process according to the second embodiment;
FIG. 15A is a flowchart illustrating an example of a priority order determination process;
FIG. 15B is a flowchart illustrating examples of scores corresponding to data sizes;
FIG. 16 is a diagram illustrating examples of priorities of respective regions according to a third embodiment;
FIG. 17A is a diagram illustrating examples of additional points based on a traveling direction; and
FIG. 17B is a diagram illustrating examples of added points and deduction points based on velocity.

[Mode for Carrying Out the Invention]

Hereinafter, embodiments of the present invention will be described with reference to the accompanying drawings.

<System Configuration

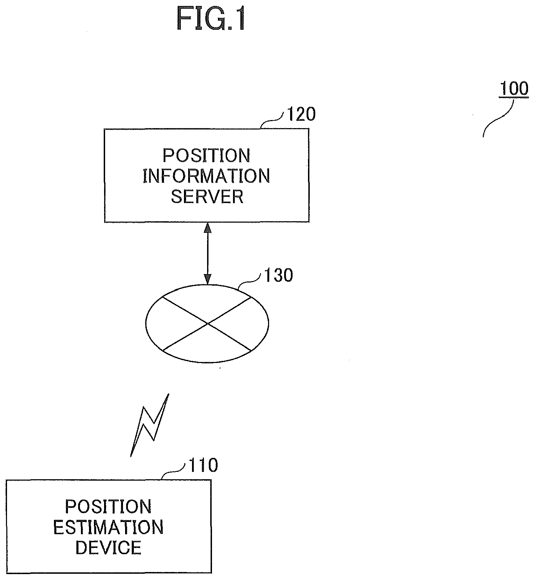

FIG. 1 is a diagram illustrating a configuration example of a position estimation system according to an embodiment. A position estimation system 100 includes, for example, a position information server 120 connected to a network 130 such as the Internet and a position estimation device 110 connectable to the network 130 using wireless communication or the like.

The position estimation device 110 is an information terminal having a position detector configured to detect the position of the position estimation device 110, for example, by a GPS (Global Positioning System), an IMES (Indoor Messaging System), a beacon transmission device, or the like. The position estimation device 110 corrects the detection information detected by the position detector by a map matching unit configured to perform map matching so as to estimate a current position of the position estimation device 110 more accurately.

The position information server 120 is a system including an information processing apparatus having a server function, or a plurality of information processing apparatuses. The position information server 120 stores map information corresponding to a plurality of regions and region information having information pieces of a plurality of regions. The map information and the region information are used in the map matching unit of the position estimation device 110. Further, the position information server 120 provides map information, region information, and the like to the position estimation device 110, in response to a request from the position estimation device 110.

<Hardware Configuration>

(HARDWARE CONFIGURATION of Position Estimation Device)

The position estimation device 110 is an information processing apparatus such as a smartphone, a tablet terminal, a PC (Personal Computer), a car navigation device, or the like having a general computer configuration. The position estimation device 110 includes, for example, a CPU (Central Processing Unit) 201, a RAM (Random Access Memory) 202, a ROM (Read Only Memory) 203, a storage unit 204, a communication I/F (Interface) 205, a display input unit 206, a GPS receiver 207, a near field communication unit 208, a microphone 209, a sensor unit 210, an external I/F 211, a bus 212, and the like.

The CPU 201 is an arithmetic device configured to implement respective functions of the position estimation device 110 by reading a program and data stored in the ROM 203, the storage unit 204, and the like onto the RAM 202 and executing processing. The RAM 202 is a volatile memory used as a work area or the like of the CPU 201. The ROM 203 is a nonvolatile memory capable of holding programs and data even when the power is turned off.

The storage unit 204 is, for example, a storage device such as an SSD (Solid State Drive) or a flash ROM, which stores an OS (Operation System), an application program, various data, and the like.

The communication I/F 205 is a communication interface such as a public wireless communication such as LTE (Long Term Evolution) or a wireless LAN (Local Area Network), which is used for connecting the position estimation device 110 to the network 130.

The display input unit 206 includes a display element such as an LCD (Liquid Crystal Display) and an input element such as a touch panel; hence, the display input unit 206 is configured to receive an input operation by a user to display a display screen by a program executed by the position estimation device 110.

The GPS receiver 207 is configured to receive a positioning signal from the GPS satellite.

The near field communication unit 208 is a wireless communication device configured to perform near field communication such as Bluetooth (registered trademark) Low Energy (hereinafter referred to as BLE). The near field communication unit 208 is used, for example, when the position estimation device 110 receives a beacon by BLE communication and detects a position.

The microphone 209 is a sound pickup device including a sound pickup element. The microphone 209 is used, for example, when the position estimation device 110 receives a beacon by sound waves and detects a position.

The sensor unit 210 is a sensor device, such as an acceleration sensor or a geomagnetic sensor, which is configured to output sensor information for calculating a moving amount, a moving direction, and the like of the position estimation device 110. The sensor unit 210 is used, for example, when the position estimation device 110 detects a position by inertial navigation based on sensor information.

The external I/F 211 is an interface with an external device. The external device includes, for example, a recording medium 213 and the like. The position estimation device 110 stores, for example, a predetermined program in the recording medium 213 and installs the program stored in the recording medium 213 to the position estimation device 110 via the external I/F 211, thereby allowing a predetermined program to be ready for execution.

Further, at least some of the GPS receiver 207, the near field communication unit 208, the microphone 209, and the sensor unit 210 described above may be connected to the position estimation device 110 via the external I/F 211.

The bus 212 is connected to each of the aforementioned components to transmit an address signal, a data signal, various control signals, and the like.

(Hardware Configuration of Position Information Server)

The position information server 120 is constituted by an information processing apparatus having a general computer configuration or a plurality of such information processing apparatuses.

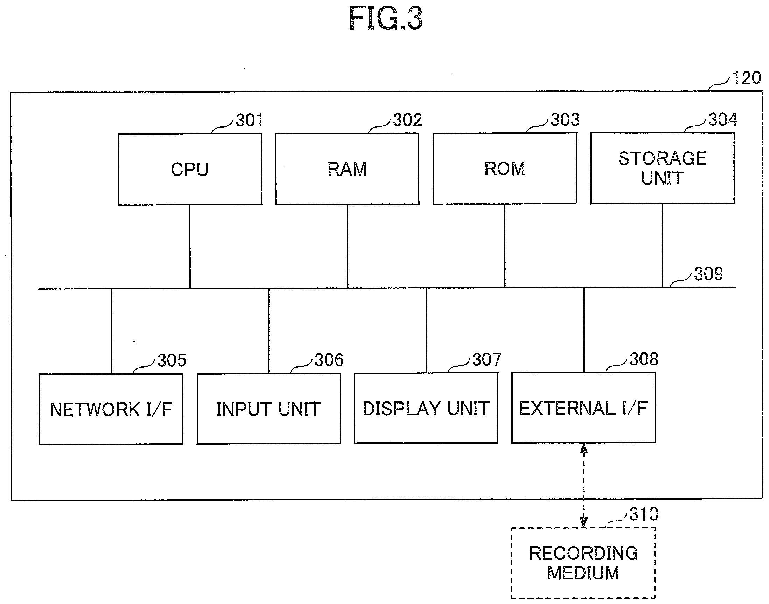

FIG. 3 is a diagram illustrating a hardware configuration example of a position information server according to an embodiment. The position information server 120 includes, for example, a CPU 301, a RAM 302, a ROM 303, a storage unit 304, a network I/F 305, an input unit 306, a display unit 307, an external I/F 308, a bus 309, and the like.

The CPU 301 is an arithmetic logic unit configured to implement each function of the position information server 120 by reading a program and data stored in the ROM 303, the storage unit 304, and the like onto the RAM 302 and executing processing. The RAM 302 is a volatile memory used as a work area or the like of the CPU 301. The ROM 303 is a nonvolatile memory capable of holding programs and data even when the power is turned off.

The storage unit 304 is, for example, a storage device such as an HDD (Hard Disk Drive) or an SSD, which stores an OS, application programs, various data, and the like.

The network I/F 305 is a communication interface such as a wired/wireless LAN for connecting the position information server 120 to the network 130.

The input unit 306 is an input device such as a pointing device, a keyboard, a touch panel, or the like for an administrator or the like of the position information server 120 to perform an input operation on the position information server 120.

The display unit 307 is a display device such as a display configured to display a processing result of the position information server 120 or the like.

The external I/F 308 is an interface with an external device. The external device includes, for example, a recording medium 310 and the like. The position estimation server 120 stores, for example, a predetermined program in the recording medium 310 and installs the program stored in the recording medium 310 to the position estimation server 120 via the external I/F 308, thereby allowing a predetermined program to be ready for execution.

The bus 309 is connected to each of the aforementioned components to transmit an address signal, a data signal, various control signals, and the like.

<Functional Configuration>

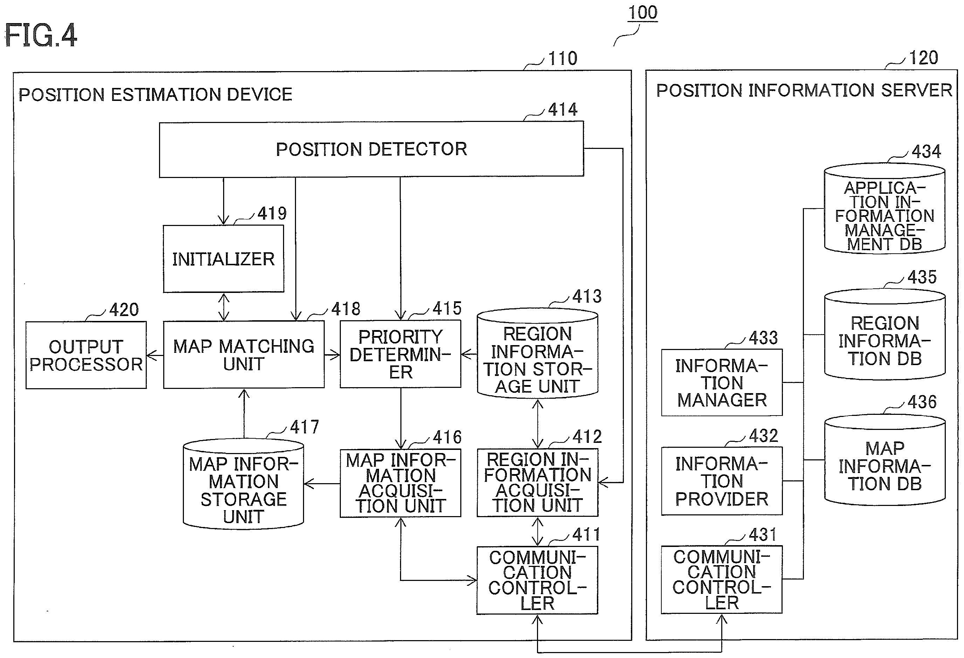

FIG. 4 is a functional configuration diagram of a position estimation system according to a first embodiment.

(Functional Configuration of Position Estimation Device)

For example, the position estimation device 110 includes a communication controller 411, a region information acquisition unit 412, a region information storage unit 413, a position detector 414, a priority determiner 415, a map information acquisition unit 416, a map information storage unit 417, a map matching unit 418, an initializer 419, an output processor 420, and the like.

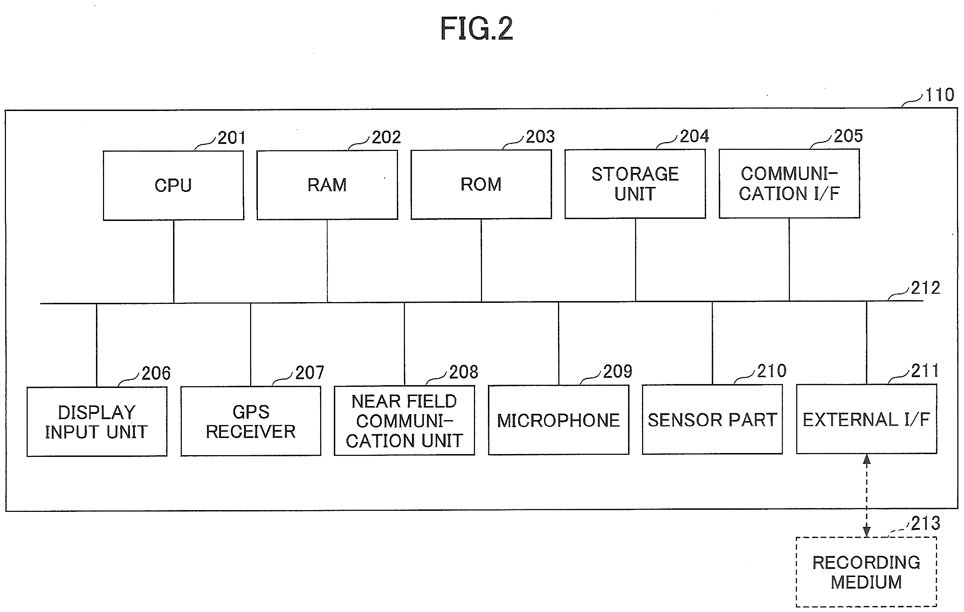

The communication controller 411 is a unit configured to perform control for connecting the position estimation device 110 to the network 130 and control for communicating with the position information server 120; the communication controller 411 is implemented, for example, by a communication I/F 205 in FIG. 2 and a program executed by the CPU 201 in FIG. 2.

The region information acquisition unit 412 is a unit configured to acquire region information which is information on a plurality of regions around the position estimation device 110; the region information acquisition unit 412 is implemented, for example, by a program executed by the CPU 201 in FIG. 2.

The region information acquisition unit 412 specifies the position of the position estimation device 110 based, for example, on detection information detected by the position detector 414, region information stored in the region information storage unit 413, and the like. Further, the region information acquisition unit 412 acquires region information of a plurality of regions in the vicinity of the device itself (i.e., the position estimation device 110) from the position information server 120, and stores the region information in the region information storage unit 413.

The region information storage unit 413 is a unit configured to store the region information acquired by the region information acquisition unit 412; the region information storage unit 413 is implemented, for example, by the RAM 202, the storage unit 204 in FIG. 2, and a program or the like executed by the CPU 201 in FIG. 2.

The position detector 414 outputs detection information indicating the position of the position estimation device 110 using, for example, the GPS receiver 207, the near field communication unit 208, the microphone 209, the sensor unit 210, the communication I/F 205, and the like in FIG. 2.

For example, the position detector 414 detects the position of the position estimation device 110 based on a positioning signal received by the GPS receiver 207 from the GPS satellite. Further, the position detector 414 receives, for example, a positioning signal output from a positioning device or the like provided indoors by the near field communication unit 208, the microphone 209, or the like, and detects the position of the position estimation device 110 based on the received positioning signal.

Furthermore, when the position detector 414 is unable to receive a positioning signal, the position detector 414 calculates a moving direction and a moving amount of the position estimation device 110 using an acceleration sensor, a geomagnetic sensor, and the like included in the sensor unit 210 so as to detect the position of the position estimation device 110. Furthermore, the position detector 414 may perform wireless communication using the communication I/F 205 to detect the position of the position estimation device 110 based on IP addresses or the like of surrounding wireless devices.

The position detector 414 is implemented, for example, by the GPS receiver 207, the near field communication unit 208, the microphone 209, the sensor unit 210, and the communication I/F 205 in FIG. 2, and a program executed by the CPU 201 in FIG. 2, and the like.

The priority determiner 415 determines priorities of the plurality of regions using information indicating the position of the position estimation device 110, such as detection information detected by the position detector 414 or the position information output from the map matching unit 418, and the region information acquired by region information acquisition unit 412. For example, the priority determiner 415 assigns a score to each of the plurality of regions based on the region information and the information indicating the position of the position estimation device 110, and determines a region having a higher total score assigned as a higher priority region. The priority determiner 415 is implemented, for example, by a program executed by the CPU 201 in FIG. 2.

The map information acquisition unit 416 is a unit configured to acquire map information corresponding to regions in order from a region with the highest priority among a plurality of regions in accordance with the priorities determined by the priority determiner 415; the map information acquisition unit 416 is implemented, for example, by a program executed by the CPU 201 in FIG. 2.

For example, the map information acquisition unit 416 transmits to the position information server 120 a map information acquisition request that includes an application ID for identifying an application operating on the position estimation device 110 and a region number for identifying a region. Further, the map information acquisition unit 416 receives the map information transmitted from the position information server 120, and stores the received map information in the map information storage unit 417.

Note that in the present embodiment, an area, in which the position estimation system 100 provides a service, is divided into regions of a predetermined size (e.g., a square of 10 to 15 m per side), and region information corresponding to each region and the map information corresponding to each region that are stored in association with each other are managed by the position information server 120.

The map information storage unit 417 is a unit configured to store the map information acquired by the map information acquisition unit 416; the map information storage unit 417 is implemented, for example, by the RAM 202, and the storage unit 204 in FIG. 2, and a program or the like executed by the CPU 201 in FIG. 2.

The map matching unit 418 combines the map information divided per each region acquired by the map information acquisition unit 416, and executes a map matching process based on the detection information detected by the position detector 414. Further, the map matching unit 418 outputs the corrected position information obtained by the map matching process, for example, to the output processor 420 or the like. The map matching unit 418 is implemented, for example, by a program executed by the CPU 201 in FIG. 2. Note that details of the map matching process will be described later.

The initializer 419 is a unit configured to perform initialization of the map matching unit 418; the initializer 419 is implemented, for example, by a program executed by the CPU 201 in FIG. 2. For example, when the accuracy of the detection information detected by the position detector 414 is determined to be higher than the accuracy of the position information output from the map matching unit 418, the initializer 419 initializes the map matching process of the map matching unit 418.

Alternatively, when the position detector 414 acquires a positioning signal by the near field communication unit 208 or the microphone 209, the initializer 419 may initialize the map matching process of the map matching unit 418, or the like.

Further, when the difference between the position indicated by the detection information detected by the position detector 414 and the current position output from the map matching unit 418 is equal to or greater than a threshold value, the initializer 419 may initialize the map matching process of the map matching unit 418.

The output processor 420 causes the display input unit 206 to display predetermined information (e.g., a navigation screen or the like) by using the corrected position information output from the map matching unit 418. The output processor 420 is implemented, for example, by a program executed by the CPU 201 in FIG. 2.

(Functional Configuration of Position Information Server)

The position information server 120 includes, for example, a communication controller 431, an information provider 432, an information manager 433, an application information management DB (Database) 434, a region information DB 435, a map information DB 436, and the like.

The communication controller 431 performs control for connecting the position information server 120 to the network 130 and control for communicating with the position estimation device 110. The communication controller 431 is implemented, for example, by the network I/F 305 in FIG. 3 and a program executed by the CPU 301 in FIG. 3.

The information provider 432 transmits the information on a region designated by the acquisition request, from among the region information stored in the region information DB 435, to the position estimation device 110, in response to the acquisition request of the region information, which is received by the communication controller 431 from the position estimation device 110. The information provider 432 is implemented, for example, by a program executed by the CPU 301 in FIG. 3.

Further, the information provider 432 provides map information designated by the acquisition request, from among the map information stored in the map information DB 436, to the position estimation device 110, in response to the map information acquisition request, which is received by the communication controller 431 from the position estimation device 110.

Preferably, the information provider 432 provides map information corresponding to a request source application to the position estimation device 110, in accordance with the application ID included in the map information acquisition request.

The information manager 433 is a unit configured to manage the map information DB 436, the region information DB 435, and the application information management DB 434; the information manager 433 is implemented, for example, by a program executed by the CPU 301 in FIG. 3.

The information manager 433 receives, for example, an update request for requesting a change in the information of the map information DB 436, the region information DB 435, or the application information management DB 434 with the input unit 306, the network I/F 305, or the like in FIG. 2, and performs a process such as adding, updating, or deleting the information.

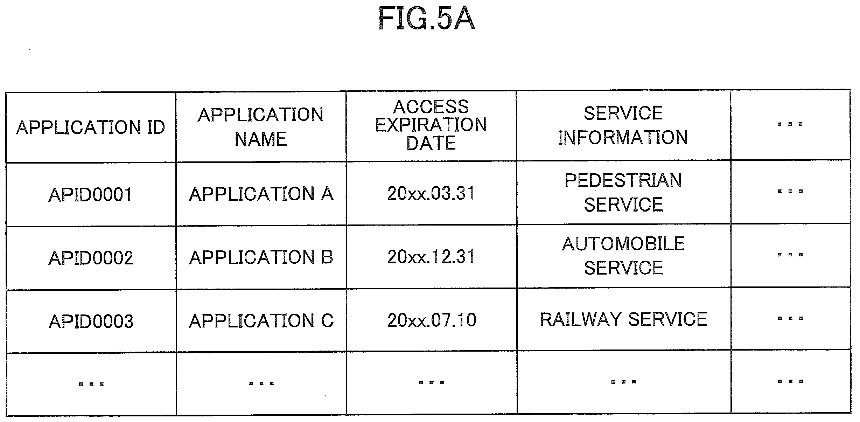

The application information management DB 434 is, for example, a unit configured to store application management information as illustrated in FIG. 5A, and is implemented, for example, by the storage unit 304 in FIG. 3 and a program executed by the CPU 301 in FIG. 3.

In the example of FIG. 5A, the application management information includes information such as "application ID", "application name", "access expiration date", "service information", and the like.

The "application ID" is, for example, unique identification information generated by the application when the application is installed in the position estimation device 110. The position estimation system 100 identifies, for example, the position estimation device 110, an application operating on the position estimation device 110, and the like, by using the application ID, without using personal information such as an email mail address or a user name.

The "application name" is name information of an application, and is an example of information for identifying the application, the vendor of the application, and the like. The "access expiration date" is information indicating an access expiration date of an application operating on the position estimation device 110. The "service information" is information indicating a type of service and the like provided by an application.

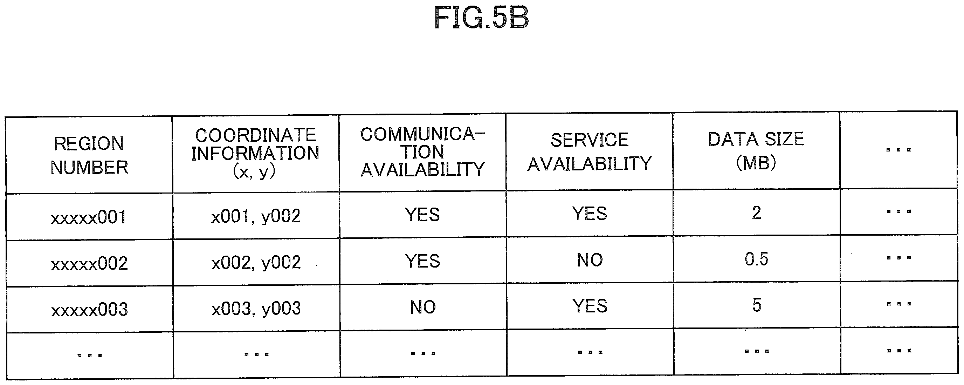

For example, the region information DB 435 is a unit configured to store region information as illustrated in FIG. 5B, and is implemented, for example, by the storage unit 304 in FIG. 3 and a program executed by the CPU 301 in FIG. 3.

In the example of FIG. 5B, the region information includes information such as "region number", "coordinate information", "communication availability", "service availability", "data size", and the like.

The "region number" is an example of identification information for identifying each of a plurality of regions. The "coordinate information" is coordinate information indicating the position of each region.

The "communication availability" is information indicating whether the position estimation device 110 is enabled to communicate with the network 130 using the communication I/F 205. For example, "NO" is stored in "communication availability" of a region where radio waves of wireless communication do not reach.

The "service availability" is information indicating whether a region is provided with a service by the position estimation system 100. For example, "No" is stored in the "service availability" of the region where the position estimation system 100 does not provide a service.

The "data size" is information indicating the data size of a map image file of the map information corresponding to each region.

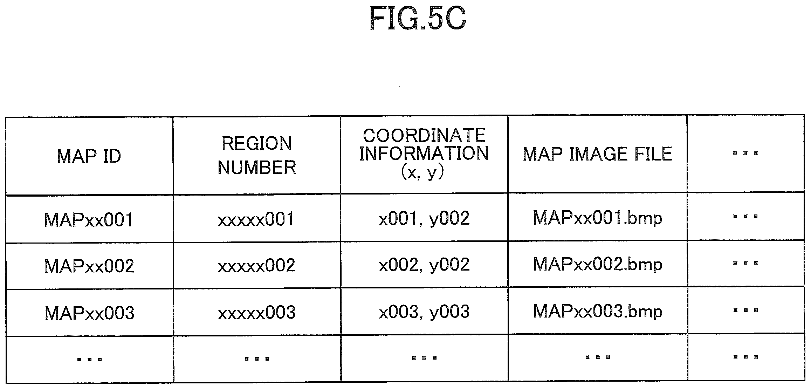

The map information DB 436 is, for example, a unit configured to store map information as illustrated in FIG. 5C, and is implemented, for example, by the storage unit 304 in FIG. 3 and a program executed by the CPU 301 in FIG. 3.

In the example of FIG. 5C, the map information includes information such as "map ID", "region number", "coordinate information", "map image file", and the like.

The "map ID" is identification information for identifying map information. The "region number" is identification information for identifying a region corresponding to a map ID, which corresponds to "region number" of region information. The "coordinate information" is coordinate information indicating a position of map information.

The "map image file" is map image data used by the position estimation device 110 for map matching. Note that the map information may include reference information (URL information or the like) for acquiring map image data instead of the "map image file". Further, the "map image file" may be a compressed file.

The map information includes maps to be used in map matching that are organized by coordinate information and stored as divided information. More specifically, the map information includes maps to be used in map matching that are each stored as a two-dimensional divided map image called a tile map.

Individual map images are associated with absolute coordinates and may be bidirectionally referred to, from map images to coordinate information or from coordinate information to map images. Further, an example of a representation form of an image may be binary image information having a white represented area and a black represented area; the white represented area indicates an area in which the position estimation device 110 or an owner subject (person, car, etc.) of the position estimation device 110 is allowed to move, and the black represented area indicates an area in which the owner subject of the position estimation device 110 is not allowed to move.

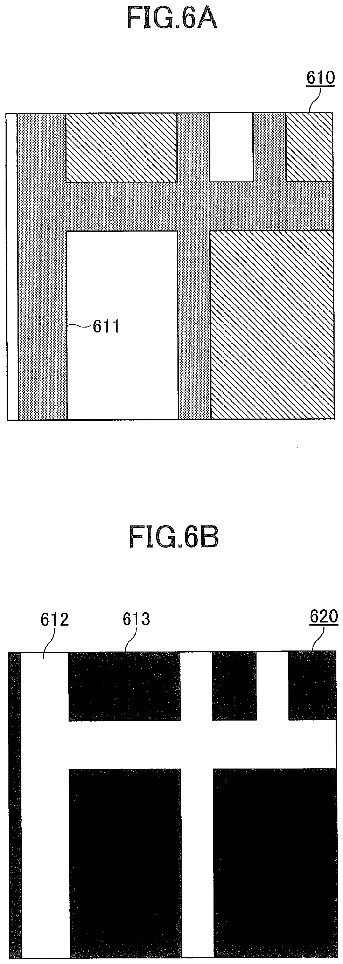

FIGS. 6A and 6B are diagrams illustrating examples of map images according to the first embodiment.

FIG. 6A illustrates an example of a layout of a region; it is assumed that, for example, a passage 611, through which a person or the like is able to pass, is arranged in a region 610 as illustrated in FIG. 6A.

FIG. 6B illustrates an example of a map image 620 corresponding to the region 610. In the example of FIG.

6B, the passage 611 in the region 610 is represented by a white movable area 612 in which a subject is movable, and an area other than the passage 611 is represented by a black unmovable area 613 in which a subject is not movable.

Note that the representation form of the map image is not limited to binary image information. For example, the representation form of the map image may be a multilevel image such as ternary image information; an area in which the position estimation device 110 or an owner subject (person, car, etc.) of the position estimation device 110 is movable may be white, an area in which a limited owner subject (e.g., an employee in the company) is movable may be red, and an area in which no owner subject is movable may be black.

Further, the map information is not limited to the multilevel image; the map information may be information that may be expanded into an image, indicating whether an area is one in which the position estimation device 110 or an owner subject of the position estimation device 110 is movable. That is, the map information includes information for specifying whether any given area is a movable area or a non-movable area.

<Sequence of Process>

The following illustrates a flowchart of a position estimation method performed by the position estimation system 100.

(Position Estimation Process)

First, an overall position estimation process performed by the position estimation device 110 will be described.

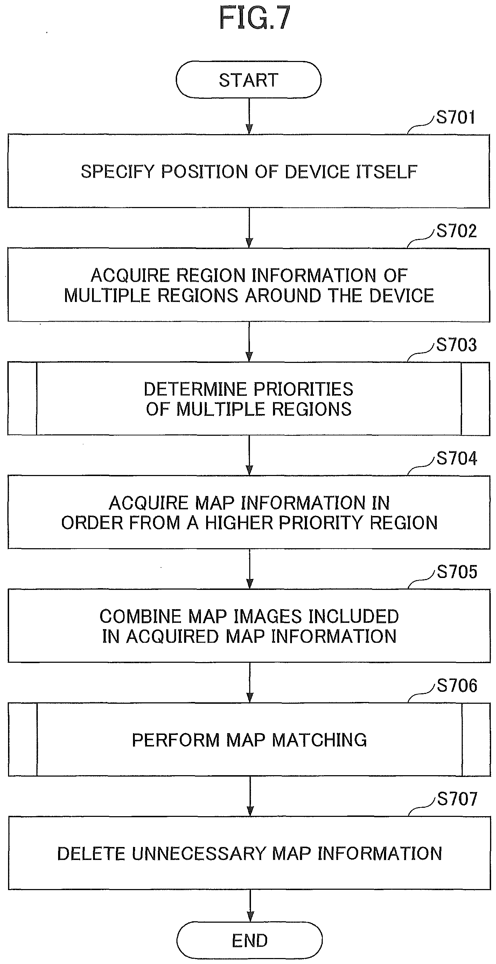

FIG. 7 is a flowchart illustrating the position estimation process according to the first embodiment.

In step S701, the region information acquisition unit 412 of the position estimation device 110 specifies the position (area, etc.) of the position estimation device 110, using the detection information detected by the position detector 414 and the region information stored in the region information storage unit 413.

In step S702, the region information acquisition unit 412 acquires region information of a plurality of regions around the position estimation device 110. Note that a range of the plurality of regions from which the region information acquisition unit 412 acquires the region information may be determined according, for example, to the moving velocity of the position estimation device 110 or the like; however, in this case, as an example, the following description will be given on the basis of assumption that region information of a predetermined range is acquired in advance.

In step S703, the priority determiner 415 of the position estimation device 110 determines priorities of a plurality of regions around the position estimation device 110, using region information acquired by the region information acquisition unit 412 and information indicating the current position of the position estimation device 110. In this case, information indicating the current position may use the detection information detected by the position detector 414, or may use the position information output by the map matching unit 418. Note that the process of determining the priorities will be described later.

In step S704, the map information acquisition unit 416 of the position estimation device 110 sequentially acquires map information corresponding to regions in order from a region with the highest priority determined by the priority determiner 415, and stores the acquired map information in the map information storage unit 417.

As another example, the map information acquisition unit 416 may simultaneously acquire map information of regions having a priority higher than a predetermined priority in place of the process of sequentially acquiring map information in order from the map information of a region with the highest priority or the like.

In this case, it is assumed that the map information acquired by the map information acquisition unit 416 includes, for example, map information of a plurality of regions adjacent to the region where the position estimation device 110 is located.

In step S705, the map matching unit 418 of the position estimation device 110 combines, among map images included in the acquired map information, a map image of a region where the position estimation device 110 is located, and map images of the adjacent regions to generate one map image.

In step S706, the map matching unit 418 performs a map matching process using the generated map image. Note that the map matching process will be described later.

In step S707, the position estimation device 110 deletes unnecessary map information from the map information stored in the map information storage unit 417 as required.

For example, the position estimation device 110 determines map information of a base point to be unnecessary, and deletes the map information of the base point after performing the position estimation process at the base point and moving out of the base point (station, business office, facility, etc.) and moving out of the base point.

(Priority Order Determination Process)

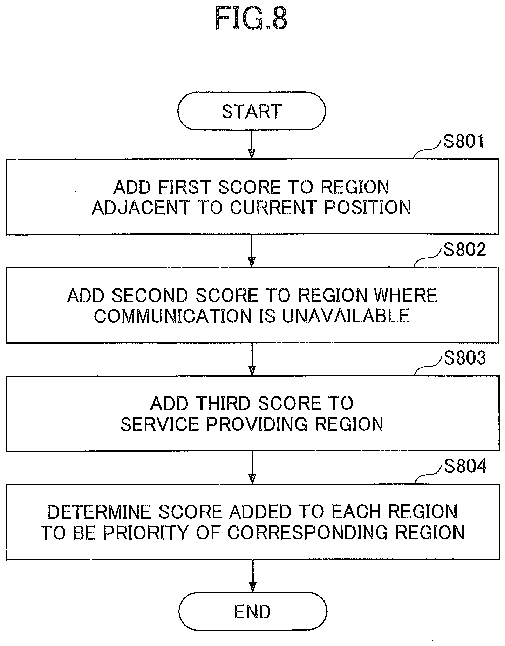

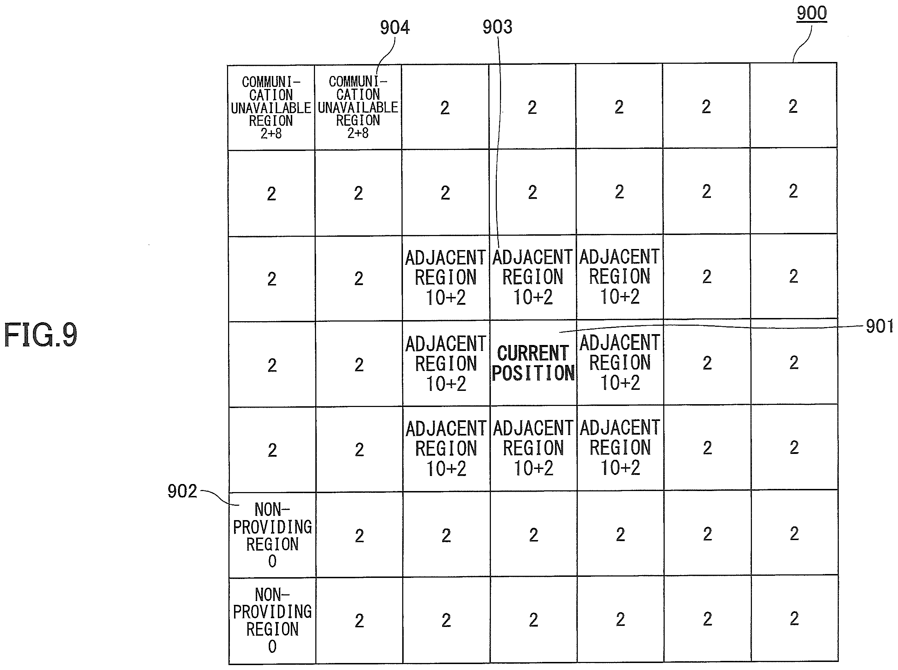

Subsequently, a priority order determination process by the priority determiner 415 of the position estimation device 110 will be described with reference to FIGS. 8 and 9. This process corresponds to step S703 in FIG. 7.

FIG. 8 is a flowchart illustrating an example of the priority order determining process according to the first embodiment.

In step S801, the priority determiner 415 adds a first score (e.g., 10 points) to a region adjacent to the current position, based on "coordinate information" included in the region information of the plurality of regions acquired by the region information acquisition unit 412.

According to this process, the priorities of regions adjacent to the current position, which are used for the map matching process, are set higher than the priorities of the other regions.

In step S802, the priority determiner 415 adds a second score (e.g., 8 points) to a region with which the position estimation device 110 is unable to communicate, based on "communication availability" information included in the region information of the plurality of regions acquired by the region information acquisition unit 412.

Through this process, the region with which the position estimation device 110 is unable to communicate is set to have a next highest priority of the adjacent region adjacent to the current position, such that the position estimation device 110 is enabled to acquire the map information in advance before communication fails.

In step S803, the priority determiner 415 adds a third score (e.g., 2 points) to a region to which the position estimation device 100 provides a service, based on "service availability" information included in the region information of the plurality of regions acquired by the region information acquisition unit 412.

Through this process, the priority of a region in which the position estimation system 100 does not provide a service may be relatively lowered.

In step S804, the score added to each region is determined to be a priority of the corresponding region, and the higher the score, the higher the priority.

FIG. 9 is a diagram illustrating examples of priorities of respective regions, according to the first embodiment.

In FIG. 9, it is assumed that a plurality of squares indicate a plurality of regions from which the region information acquisition unit 412 has acquired region information. In addition, the number noted within each square region indicates a score (points) added by the priority order determination process illustrated in FIG. 8.

In FIG. 9, the plurality of adjacent regions 903 adjacent to the current position 901 each have a priority score of 12 points, based on the 10 points added in step S801 of FIG. 8 and the two points added in step S803; this priority score of 12 points is higher than priority scores of the other regions.

As a result, the position estimation device 110 may preferentially acquire map information of a plurality of adjacent regions 903 used for map matching.

In FIG. 9, a plurality of communication unavailable regions 904, in which the position estimation device 110 is unable to perform communication, has a priority score of 10 points, based on the 8 points added in step S802 of FIG. 8 and the two points added in step S803; this priority score of 10 points is a next highest priority after the adjacent regions 903.

Hence, the position estimation device 110 may acquire, in advance, map information of a plurality of communication unavailable regions 904 in which the position estimation device 110 is unable to perform communication.

Further, in FIG. 9, non-providing regions 902 are regions in which the position estimation system 100 does not provide a service, and the score is not added to the non-providing regions 902 by the priority determining process in FIG. 8.

As a result, the position estimation device 110 may be enabled to skip the acquisition process of the map information of the communication unavailable regions 904 to reduce burden on the process. In the present embodiment, by adopting a point addition scoring method, the position estimation system 100 is configured such that the higher the score is, the higher the priority is. However, for example, by adopting a point deduction scoring system, the position estimation system 100 may be configured such that the lower the score is, the higher the priority is.

(Map Matching Process)

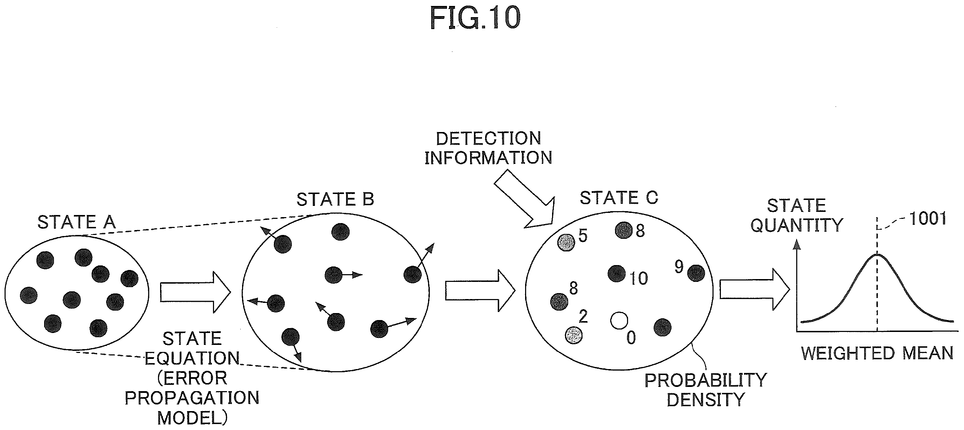

Subsequently, a map matching process by the map matching unit 418 of the position estimation device 110 will be described with reference to FIGS. 10 to 12.

In the present embodiment, the map matching unit 418 performs map matching using a particle filter, which is one of the Monte Carlo methods. In the particle filter, a plurality of weighted particles are used to make a transition based on a state equation, and a state (e.g., position) of the system is estimated from the mean of the weighted particles.

FIG. 10 is a diagram for explaining a particle filter.

When estimating the state (e.g., position) of the system using a particle filter, resampling for arranging weighted particles (hereinafter referred to as particles) in a predetermined range is first performed, as illustrated in the state A in FIG. 10. At this stage, particles gather densely and the weights of the particles are initialized.

Next, as illustrated in the state B of FIG. 10, particles are, for example, moved based on detection information detected by the position detector 414 and the state equation representing a state transition model of particles.

The particle state transition model may be represented by the following state equation, for example.

[Eq. 1]

$$x_p = (v_x + Nxp)\Delta t$$

$$y_p = (v_y + Nyp)\Delta t$$

$$Nxp \sim N(\mu, \sigma^2) \quad Nyp \sim N(\mu, \sigma^2)$$

In the above state equation, $(x_p, y_p)$ indicates a position, and $(v_x, v_y)$ indicates a velocity. Further, Nxp and Nyp indicate random variations of the Gaussian distribution.

For example, the map matching unit 418 calculates a velocity (vx, vy) using the detection information detected by the position detector 414, adds noise Nxp and Nyp according to the Gaussian distribution to the calculated velocity, and performs time integration to estimate the position (xp, yp) of each particle.

Subsequently, as illustrated in the state C of FIG. 10, the map matching unit 418 determines the weight of each particle based, for example, on the detection information detected by the position detector 414 and the position of the corresponding particle. In the state C of FIG. 10, as an example, the weight of a particle close to the detected position is determined to be high, and the weights of the particles separated from the detected position are set low.

Note that it is possible to calculate (estimate) a current position 1001 by calculating the mean of the weight of each particle in each of an x direction and a y direction.

By repeating the above process, it is possible to continuously estimate the current position.

In the present embodiment, this method applied to map matching process is called map matching by the Monte Carlo method.

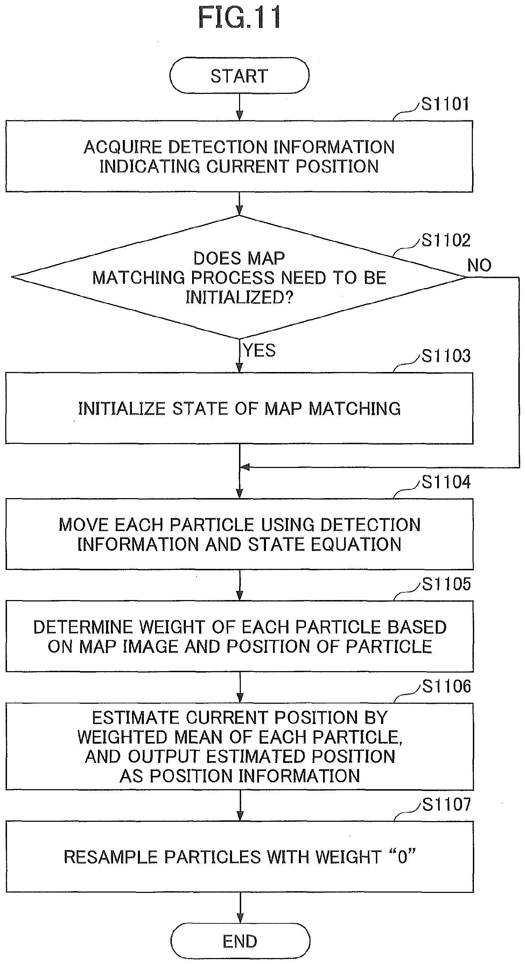

FIG. 11 is a flowchart illustrating an example of the map matching process according to the first embodiment. This process indicates an example of the map matching process by the Monte Carlo method. Further, this process corresponds to step S706 in FIG. 7.

In step S1101, the position detector 414 of the position estimation device 110 acquires detection information indicating a current position.

In step S1102, the initializer 419 determines whether the map matching process needs to be initialized, based on the acquired detection information.

For example, when the current position indicated by the detection information acquired from the position detector 414 is separated from the position indicated by the position information output from the map matching unit 418 by a threshold value or more, the initializer 419 determines that the map matching process needs to be initialized.

Alternatively, when the initializer 419 determines that the accuracy of the detection information acquired from the position detector 414 is higher than predetermined accuracy, the initializer 419 may determine that the map matching process needs to be initialized.

When the initializer 419 determines that the map matching process does not need to be initialized, the map matching unit 418 maintains the current state of the map matching.

By contrast, when the initializer 419 determines that the map matching process needs to be initialized, the map matching unit 418 initializes the state of the map matching.

Further, the map matching unit 418 initializes the state of the map matching also at the start of the map matching.

In step S1104, the map matching unit 418 moves each particle using the current position acquired by the position detector 414 and the above-described state equation.

In step S1105, the map matching unit 418 determines the weight of each particle based on the map image combined in step S705 of FIG. 7 and a position of the corresponding particle.

According to the present embodiment, for example, in the map image 620 illustrated in FIG. 6B, the map matching unit 418 determines that particles present in a white movable area 612 are normal particles (hereinafter referred to as normal particles) and sets the weights of the normal particles to "1". Further, the map matching unit 418 determines that particles present in a black unmovable area 613 are abnormal particles (hereinafter referred to as abnormal particles), and sets the weights of the abnormal particles to "0".

In step S1106, the map matching unit 418 estimates a current position by a weighted mean of each particle, and outputs position information indicating the estimated position. For example, the map matching unit 418 estimates the current position by excluding abnormal particles with a weight of "0" and calculating a mean of positions of normal particles with a weight of "1".

In step S1107, the map matching unit 418 resamples the abnormal particles having the weight "0". For example, the map matching unit 418 resamples the abnormal particles around the current position estimated in step S1106, with the weight set to "1".

The map matching unit 418 of the position estimation device 110 executes the above-described map matching process, for example, at predetermined time intervals (100 ms interval or the like) to correct the current position detected by the position detector 414.

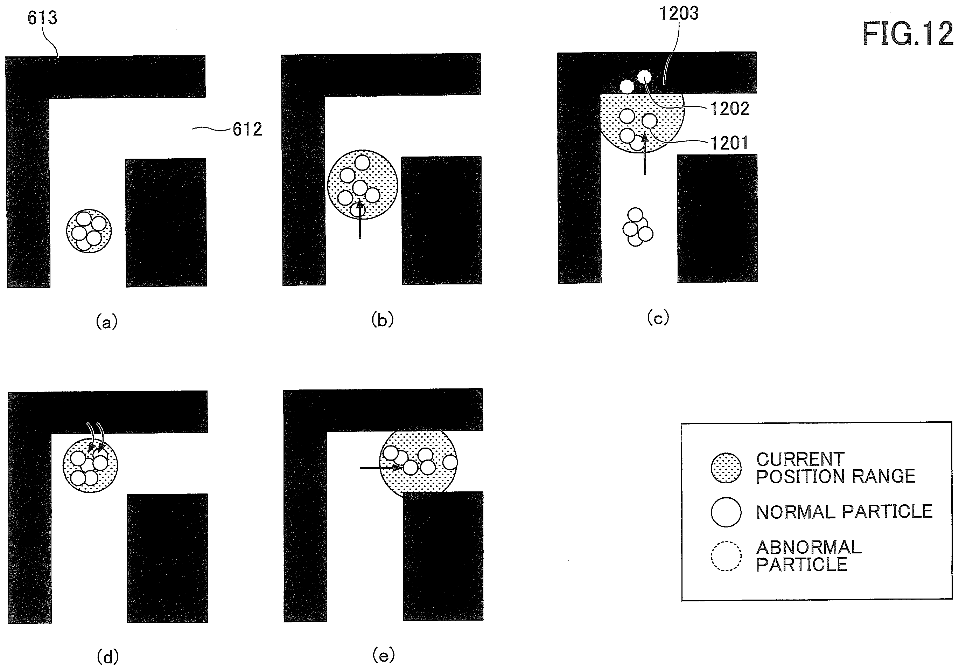

Hereinafter, a specific example of the map matching process by the map matching unit 418 will be described with reference to FIG. 12.

FIG. 12 is a diagram illustrating the map matching process according to the first embodiment. In FIG. 12, the white area indicates a movable area 612 among the map images combined in step S705 in FIG. 7, and the black area indicates an unmovable area among the map images combined in step S705 in FIG. 7, respectively.

FIG. 12 (a) indicates a state when the map matching unit 418 starts a map matching process. In this case, the map matching unit 418 resamples particles within a predetermined range, for example, around the current position indicated by the detection information detected by the position detector 414. This process, for example, corresponds to step S1103 in FIG. 11.

In FIG. 12 (b), when the position estimation device 110 moves, the map matching unit 418 moves particles using the detection information detected by the position detector 414 and the above-described state equation. This process, for example, corresponds to step S1104 in FIG. 11. In the state of FIG. 12 (b), since all the particles are located in the white movable area 612, the weights of all the particles are "1".

In FIG. 12 (c), when the position estimation device 110 further moves, the map matching unit 418 further moves the particles using the detection information detected by the position detector 414 and the above-described state equation (step S1104 in FIG. 11).

In FIG. 12 (c), there are normal particles 1201 located in the white movable area 612 and abnormal particles 1202 located in the black unmovable area 613, and a current position range 1203 is expanded. In this case, the map matching unit 418 sets the weights of normal particles 1201 to "1" and the weights of abnormal particles to "0". This process, for example, corresponds to step S1105 in FIG. 11.

In FIG. 12 (d), the map matching unit 418 initializes the weights of abnormal particles 1202 to "1", and resamples particles around the current position estimated in step S1106 of FIG. 11. This process, for example, corresponds to step S1107 in FIG. 11. By this process, the current position range 1203 converges.

In FIG. 12 (e), when the position estimation device 110 further moves, the map matching unit 418 further moves particles using the detection information detected by the position detector 414 and the above-described state equation. The map matching unit 418 repeats such a map matching process at predetermined time intervals (100 ms intervals or the like), for example.

Through the above process, the abnormal particles 1202 in the unmovable area 613 of the map image resampled to the current position estimated by the normal particle 1201, the current position range 1203 may be prevented from expanding.

As described above, the position estimation device 110 according to the present embodiment preferentially acquires map information of the adjacent region 903 adjacent to the current position and the communication unavailable region 904 in which the position estimation device 110 is unable to perform communication.

According to the present embodiment, a position estimation device 110 for performing map matching using map information acquired from a position information server 120 is enabled to continue map matching regardless of destination information or route information even when communication is unavailable.

SECOND EMBODIMENT

The functional configuration of the position estimation system 100 according to the first embodiment illustrated in FIG. 4 is an example, and the position estimation system according to the present invention may have various system configurations. In a position estimation system according to a second embodiment, an illustration is given of another example, where the position information server 120 includes the region information acquisition unit 412, a priority determiner 415, and the map information acquisition unit 416.

<Functional Configuration

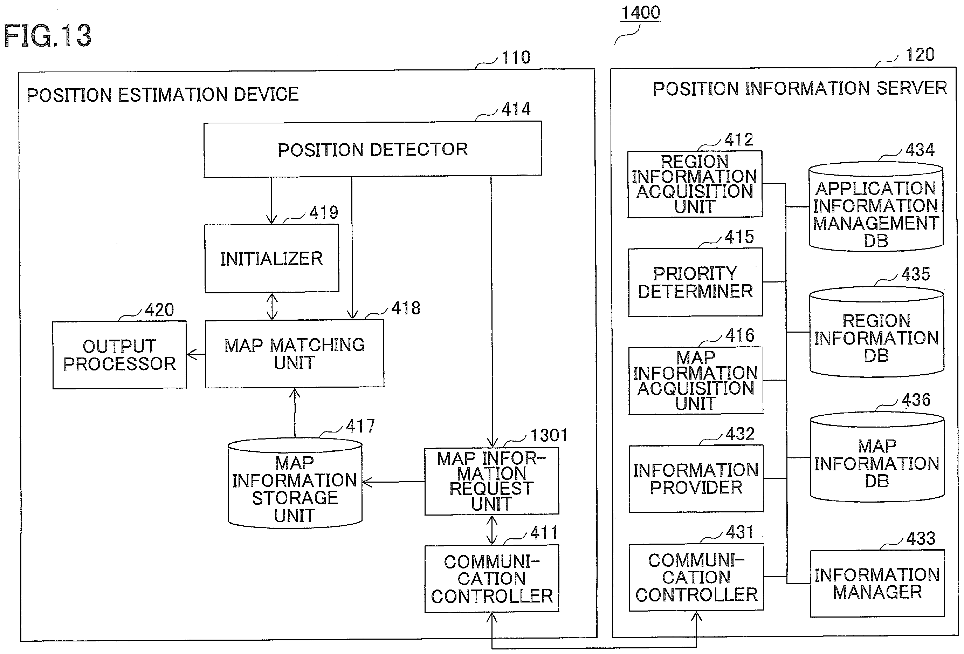

FIG. 13 is a functional configuration diagram illustrating a position estimation system according to the second embodiment.

(Functional Configuration of Position Information Server)

In addition to the functional configuration of the position information server 120 according to the first embodiment illustrated in FIG. 4, the position information server 120 according to the present embodiment further includes a region information acquisition unit 412, a priority determiner 415, and a map information acquisition unit 416.

The region information acquisition unit 412 acquires region information, which is information on a plurality of regions around the position estimation device 110, from the region information DB 435, in response to the map information acquisition request transmitted from the position estimation device 110. The region information acquisition unit 412 is implemented, for example, by a program executed by the CPU 301 in FIG. 3.

For example, a map information acquisition request transmitted from the position estimation device 110 includes information indicating the position of the position estimation device 110 (detection information or the like detected by the position detector 414). The region information acquisition unit 412 acquires region information, which is information on a plurality of regions around the position estimation device 110, from the region information DB 435, based on the information indicating a position of the position estimation device 110.

Preferentially, a map information acquisition request transmitted from the position estimation device 110 includes information indicating the position of the position estimation device 110 and an application ID of the position estimation device 110. The region information acquisition unit 412 acquires region information, which is information on a plurality of regions around the position estimation device 110, based on the information indicating the position of the position estimation device 110 and the application ID.

For example, in the application management information illustrated in FIG. 5A, service information "pedestrian service" is associated with the application ID "APID0001". Likewise, service information "automobile service" is associated with the application ID "APID0002".

In this case, when the region information acquisition unit 412 receives a map information acquisition request including the application ID "APID0002", it is desirable to acquire region information in a wider range than in the range requested by the map information acquisition request including the application ID "APID0001". This is because the moving velocity of an automobile is faster than that of the pedestrian.

The priority determiner 415 determines priorities of the plurality of regions using information indicating the position of the position estimating device 110 included in the map information acquisition request output from the position estimating device 110, and the region information acquired by region information acquisition unit 412. Note that a priority determination method by the priority determiner 415 may be the same as that of the first embodiment, for example. The priority determiner 415 is implemented, for example, by a program executed by the CPU 301 in FIG. 3.

The map information acquisition unit 416 is a unit configured to acquire map information corresponding to regions in order from a region with the highest priority among a plurality of regions, in accordance with the priorities determined by the priority determiner 415. The map information acquisition unit 416 is implemented, for example, by a program executed by the CPU 301 in FIG. 3.

The information provider 432 transmits the map information acquired by the map information acquisition unit 416 to the position estimation device 110 acting as a request source of the map information acquisition request.

Preferably, the information provider 432 receives the map information acquisition request transmitted from the position estimation device 110, and verifies the application ID included in the map information acquisition request. For example, when the application ID included in the map information acquisition request is included in the application management information illustrated in FIG. 5A, and the access expiration date has not expired, the information provider 432 returns the map information acquired by the map information acquisition unit 416, in response to the map information acquisition request.

(Functional Configuration of Position Estimation Device)

The position estimation device 110 according to the second embodiment) includes a map information request unit 1301 instead of the region information acquisition unit 412, the priority determiner 41, and the map information acquisition unit 416 included in the position estimation device 110 according to the first embodiment illustrated in FIG. 4.

The map information request unit 1301 includes information (e.g., detection information or the like detected by the position detector 414) indicating the position of the position estimation device 110 and an application ID of the position estimation device 11 itself, and is configured to transmit a map information acquisition request for requesting acquisition of map information to the position information server 120. Further, the map information request unit 1301 receives map information transmitted from the position information server 120 in response to the map information acquisition request, and stores the received map information in the map information storage unit 417.

With the above configuration, the map matching unit 418 of the position estimation device 110 is enabled to perform the map matching process, using the map information stored in the map information storage unit 417 as in the first embodiment.

<Sequence of Process>

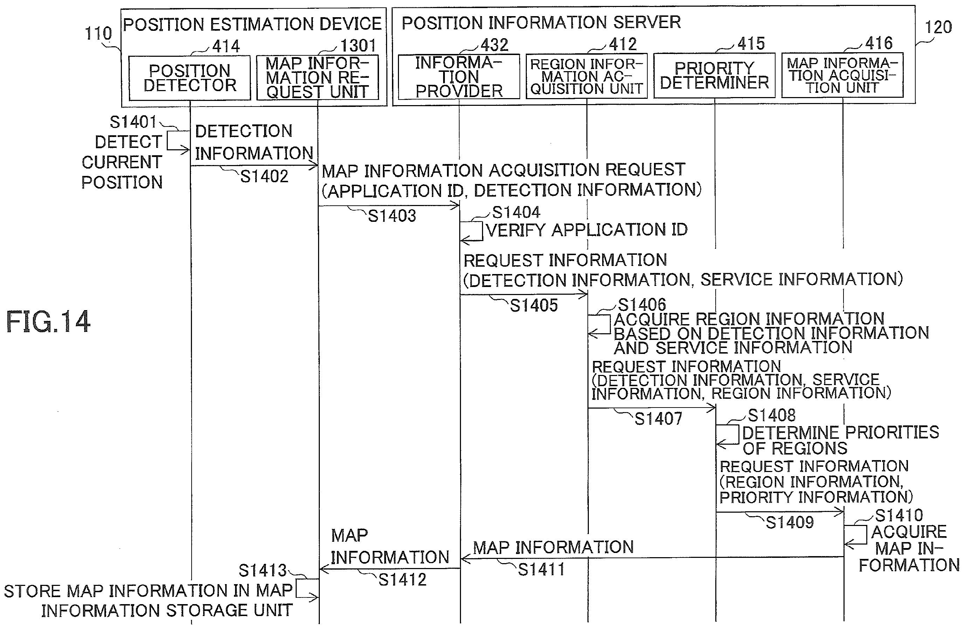

FIG. 14 is a sequence diagram illustrating an example of a map information acquisition process according to the second embodiment.

In step S1401, the position detector 414 of the position estimation device 110 detects a current position of the position estimation device 110. In step S1402, the position detector 414 of the position estimation device 110 reports detection information indicating the detected current position to the map information request unit 1301.

In step S1403, the map information request unit 1301 transmits a map information acquisition request including the application ID of the position estimation device 110 and the detection information reported from the position detector 414 to the position information server 120.

In step S1404, the information provider 432 of the position information server 120 receives the map information acquisition request transmitted from the position estimation device 110, and verifies the application ID included in the map information acquisition request.

For example, the information provider 432 determines whether the application ID included in the map information acquisition request is stored in the application management information of the application information management DB 434, and when the application ID is stored in the application management information, the information provider 432 executes the following process.

In this case, preferably, the information provider 432 acquires service information and the like corresponding to the application ID from the application management information.

In step S1405, the information provider 432 of the position information server 120 reports request information including detection information indicating the position of the position estimation device 110 to the region information acquisition unit 412. Preferably, the request information reported by the information provider 432 includes service information and the like corresponding to the application ID of the position estimation device 110.

In step S1406, the region information acquisition unit 412 of the position information server 120 acquires a plurality of region information pieces around the current position of the position estimation device 110 from the region information DB 435 according to request information reported from the information provider 432.

Preferably, the region information acquisition unit 412 determines a range of a plurality of regions to be acquired, etc. according to the service information included in the request information reported from the information provider 432.

In step S1405, the region information acquisition unit 412 of the position information server 120 reports to the priority determiner 415 request information including detection information indicating the position of the position estimation device 110 and the acquired region information.

Preferably, the request information reported by the region information acquisition unit 412 includes service information and the like corresponding to the application ID of the position estimation device 110.

In step S1408, the priority determiner 415 of the position information server 120 determines priorities of the plurality of regions by using the region information included in the request information reported from the region information acquisition unit 412 and the detection information.

In this case, preferably, the priority determiner 415 determines the priorities of the plurality of regions by adding the service information corresponding to the application ID of the position estimation device 110.

In step S1409, the priority determiner 415 of the position information server 120 reports to the map information acquisition unit 416 request information including priority information indicating the determined priorities and region information.

In step S1410, the map information acquisition unit 416 of the position information server 120 acquires the map information from the map information DB 436 according to the priority information reported from the priority determiner 415.

In step S1411, the map information acquisition unit 416 reports the acquired map information to the information provider 432.

In step S1412, the information provider 432 of the position information server 120 transmits the map information reported from the map information acquiring unit 416 to the position estimation device 110 that has transmitted the map information acquisition request.

In step S1413, the map information request unit 1301 of the position estimation device 110 receives the map information transmitted from the position information server 120, and stores the received map information in the map information storage unit 417.

Through the process described above, map information to be used for map matching is stored in the map information storage unit 417 of the position estimation device 110 as in the first embodiment.

Further, according to the second embodiment, the position information server 120 may be enabled to manage accounts, manage map information to be provided, etc. based on the application ID of the position estimation device 110.

THIRD EMBODIMENT

The process of determining the order of priority according to the first embodiment illustrated in FIG. 8 is an example.

As another example, the priority determiner 415 according to the first embodiment and the second embodiment may be enabled to determine priorities of a plurality of regions, with taking into account a data size of the map information.

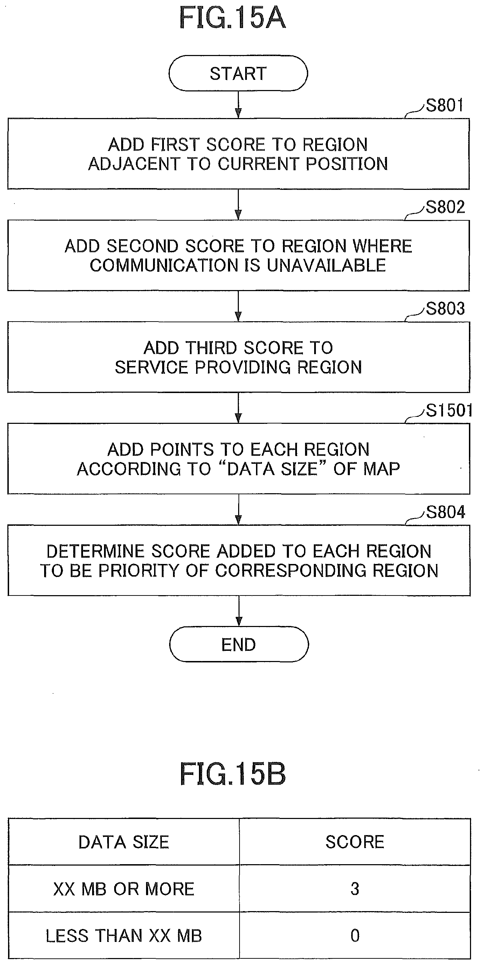

FIG. 15A and FIG. 15B are diagrams illustrating an example of priority order determination process according to a third embodiment.

FIG. 15A is a flowchart illustrating an example of the priority order determining process according to the third embodiment. In the flowchart illustrated in FIG. 15A, a process of step S1501 is added to the flowchart of the priority order determination process according to the first embodiment illustrated in FIG. 8. Note that steps S801 to S803 and step S804 of FIG. 15A are the same as those of the priority order determination process according to the first embodiment illustrated in FIG. 8; hence, the following mainly illustrates the difference from the first embodiment.

In step S1501, the priority determiner 415 adds points to each region according to the "data size" of the map image included in the region information of each region.

For example, as illustrated in FIG. 15B, for example, the priority determiner 415 adds a predetermined score (e.g., three points) to a region where a data size of a map image is larger than a predetermined threshold value.

The map image according to the third embodiment may, for example, be a compressed file of a binary map image as illustrated in FIG. 6B. In this case, the data size of the map image being large may indicate that the map image includes information on detailed roads and passages, which is considered to be a region where a map matching difficulty level is relatively high. By contrast, the data size of the map image being small may indicate that the map image includes information on a simple single road, and the like, which is considered to be a region where the matching difficulty level is relatively low.

In the third embodiment, map information of a region having a large data size of the map image, which is considered to have a relatively high map matching difficulty level, is preferentially acquired.

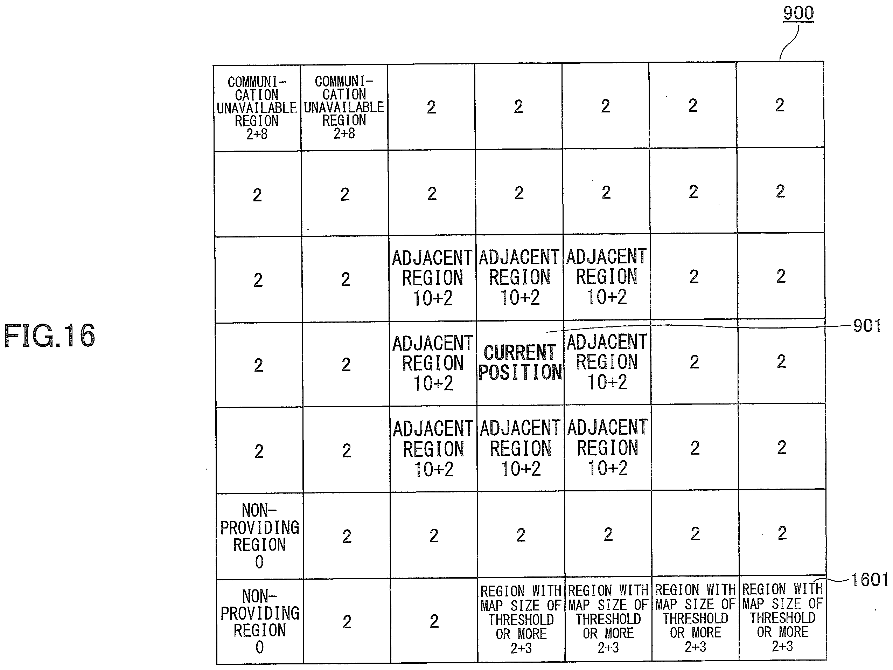

FIG. 16 is a diagram illustrating examples of priorities in respective regions, according to the third embodiment.

In FIG. 16, in the region 1601 with the data size of the map image being equal to or larger than a threshold, a score of the priority is 5 points composed of three points added in step S1501 of FIG. 15A and two points added in step S803.

Accordingly, the position estimation device 110 may be enabled to preferentially acquire map information of a region including detailed roads and passages and having a relatively high map matching difficulty level.

OTHER EMBODIMENTS

The priority determination method by the priority determiner 415 may enable various applications.

For example, the priority determiner 415 may specify a traveling direction of the position estimation device 110, based on the detection information detected by the position detector 414 or the position information output from the map matching unit 418, and may determine a priority of the traveling direction to be high.

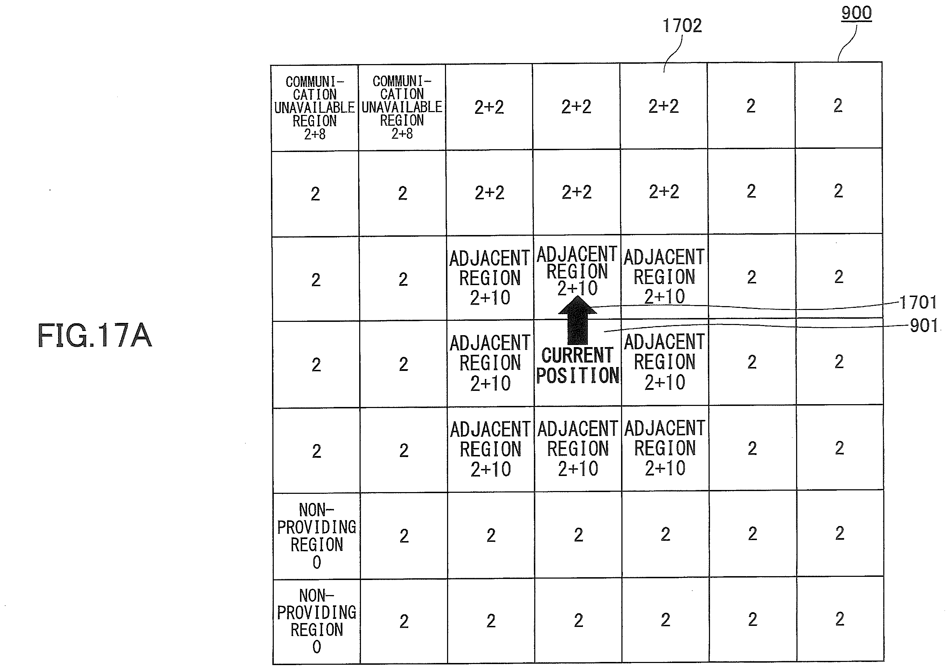

For example, in the example illustrated in FIG. 17A, the priority determiner 415 adds two points to a plurality of regions 1702 present in the traveling direction 1701 of the position estimation device 110.

As a result, the position estimation device 110 may be enabled to preferentially acquire the map information present in the traveling direction 1701.

Alternatively, as another example, the priority determiner 415 may specify the velocity of the position estimation device 110 based on the detection information detected by the position detector 414 or the position information output from the map matching unit 418, and may add points to or deduct points from each region according to the velocity.

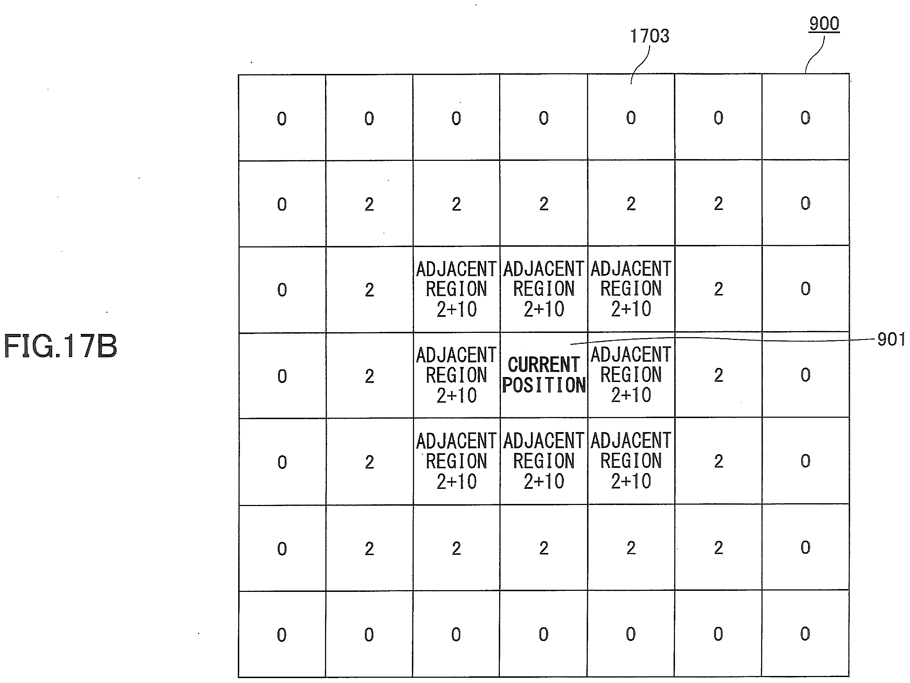

For example, in the example shown in FIG. 17B, when the velocity of the position estimation device 110 is equal to or less than a threshold value, the priority determiner 415 sets the priorities of the plurality of regions 1703 farthest from the current position 901 to "0" (e.g., "2" is reduced).

As a result, the position estimation device 110 is enabled to acquire map information in a suitable range according to the velocity of the position estimation device 110.

Although the present invention has been described based on the embodiments, the present invention is not limited to the above-described embodiments, and various modifications may be made within the scope described in the claims.

In other words, one skilled in the art can make various changes to the present invention, with reference to the known conventional art, without departing from the scope of the present invention. It is needless to say that such changes are still included in the scope of the present invention as long as the configurations of the wireless communication apparatus and the mobile device of the present invention are provided.

The present application is based on and claims the benefit of priority of Japanese Priority Application No.

2016-039407 filed on March 1, 2016, the entire contents of which are hereby incorporated by reference.

[Description of Reference Symbols]

| | |
|---|---|
| 100 | position estimation system |
| 110 | position estimation device |
| 120 | position information server (server apparatus) |
| 412 | region information acquisition unit |
| 414 | position detector |
| 415 | priority determiner |
| 416 | map information acquisition unit |
| 418 | map matching unit |
| 419 | initializer |

**Claims**

1. A position estimation device for estimating position information of the position estimation device itself using detection information detected by a position detector and predetermined map information acquired from a server apparatus connected via a network, the position estimation device comprising:

   a priority determiner configured to determine priorities of a plurality of regions, using region information including respective information pieces of the plurality of regions around the position estimation device and one of the detection information and the position information; and
   a map information acquisition unit configured to acquire the predetermined map information corresponding to at least some of the plurality of regions from the server apparatus in accordance with the priorities determined by the priority determiner.

2. The position estimation device according to claim 1, wherein
   the region information includes information indicating whether a communication with the network is available in each of the plurality of regions.

3. The position estimation device according to claim 1 or 2, wherein
   the region information includes information indicating whether the server apparatus provides the predetermined map information in each of the plurality of regions.

4. The position estimation device according to any one of claims 1 to 3, wherein
   the region information includes information indicating a data size of the predetermined map information corresponding to each of the plurality of regions.

5. The position estimation device according to any one of claims 1 to 4, wherein
   the priority determiner assigns a predetermined score to each of the plurality of regions, based on the region information and one of the detection information and the position information, and
   the map information acquisition unit acquires the predetermined map information corresponding to the each of the regions based on a corresponding one of the predetermined scores assigned by the priority determiner.

6. The position estimation device according to claim 5, wherein
   the priority determiner assigns a higher score to an adjacent region than other regions, the adjacent region being adjacent to a current position of the position estimation device among the plurality of regions.

7. The position estimation device according to any one of claims 1 to 6, wherein
   the predetermined map information includes information expandable into an image to indicate indicates whether a given area is an area in which the position estimation device or a subject having the position estimation device is movable.

8. The position estimation device according to claim 7, wherein

the predetermined map information includes binary image information indicating whether a given area is an area in which the position estimation device or a subject having the position estimation device is movable.

9. The position estimation device according to any one of claims 1 to 8, further comprising:

a map matching unit configured to perform map matching using the predetermined map information so as to correct the detection information detected by the position detector.

10. The position estimation device according to claim 9, wherein
the map matching unit performs the map matching by a particle filter.

11. The position estimation device according to claim 9 or 10, further comprising:

an initializer configured to initialize the map matching by the map matching unit, in response to a difference between the detection information detected by the position detector and the position information output from the map matching unit being equal to or greater than a threshold value.

12. The position estimation device according to claim 9 or 10, further comprising:

an initializer configured to initialize the map matching by the map matching unit, in response to accuracy of the detection information detected by the position detector being determined to be higher than accuracy of the position information output from the map matching unit.

13. The position estimation device according to any one of claims 1 to 12, further comprising:

a region information acquisition unit configured to acquire the region information corresponding to the plurality of regions around the position estimation device from the server apparatus.

14. A program for causing a position estimation device to perform following functions, the position estimation device estimating position information of the position estimation device itself using detection information detected by a position detector and predetermined map information acquired from a server apparatus connected via a network, the following functions comprising:

a priority determiner configured to determine priorities of a plurality of regions, using region information including respective information pieces of the plurality of regions around the position estimation device and one of the detection information and the position information; and
a map information acquisition unit configured to acquire the predetermined map information corresponding to at least some of the plurality of regions from the server apparatus in accordance with the priorities determined by the priority determiner.

15. A position estimation method performed by a position estimation device, the position estimation device estimating position information of the position estimation device itself using detection information detected by a position detector and predetermined map information acquired from a server apparatus connected via a network, the position estimation method comprising:

determining priorities of a plurality of regions, using region information including respective information pieces of the plurality of regions around the position estimation device and one of the detection information and the position information; and
acquiring the predetermined map information corresponding to at least some of the plurality of regions from the server apparatus in accordance with the priority determined in the determining.

# FIG.1

100

# FIG.2

EP 3 425 339 A1

# FIG.3

EP 3 425 339 A1

FIG.4

100

110

120

POSITION ESTIMATION DEVICE

414
POSITION DETECTOR

419
INITIALIZER

420
OUTPUT PROCESSOR

418
MAP MATCHING UNIT

415
PRIORITY DETERMIN-ER

413
REGION INFORMA-TION STOR-AGE UNIT

417
MAP INFOR-MATION STORAGE UNIT

416
MAP INFOR-MATION ACQUISI-TION UNIT

412
REGION IN-FORMATION ACQUISI-TION UNIT

411
COMMUNI-CATION CONTROL-LER

POSITION INFORMATION SERVER

434
APPLICA-TION IN-FORMATION MANAGE-MENT DB

435
REGION INFORMA-TION DB

436
MAP INFORMA-TION DB

433
INFORMA-TION MANAGER

432
INFORMA-TION PROVIDER

431
COMMUNI-CATION CONTROL-LER

EP 3 425 339 A1

## FIG.5A

| APPLICATION ID | APPLICATION NAME | ACCESS EXPIRATION DATE | SERVICE INFORMATION | . . . |
|---|---|---|---|---|
| APID0001 | APPLICATION A | 20xx.03.31 | PEDESTRIAN SERVICE | . . . |
| APID0002 | APPLICATION B | 20xx.12.31 | AUTOMOBILE SERVICE | . . . |
| APID0003 | APPLICATION C | 20xx.07.10 | RAILWAY SERVICE | . . . |
| . . . | . . . | . . . | . . . | . . . |

EP 3 425 339 A1

## FIG.5B

| REGION NUMBER | COORDINATE INFORMATION (x, y) | COMMUNICA-TION AVAILABILITY | SERVICE AVAILABILITY | DATA SIZE (MB) | . . . |
|---|---|---|---|---|---|
| xxxxx001 | x001, y002 | YES | YES | 2 | . . . |
| xxxxx002 | x002, y002 | YES | NO | 0.5 | . . . |
| xxxxx003 | x003, y003 | NO | YES | 5 | . . . |
| . . . | . . . | . . . | . . . | . . . | . . . |

EP 3 425 339 A1

# FIG.5C

| MAP ID | REGION NUMBER | COORDINATE INFORMATION (x, y) | MAP IMAGE FILE | · · · |
|---|---|---|---|---|
| MAPxx001 | xxxxx001 | x001, y002 | MAPxx001.bmp | · · · |
| MAPxx002 | xxxxx002 | x002, y002 | MAPxx002.bmp | · · · |
| MAPxx003 | xxxxx003 | x003, y003 | MAPxx003.bmp | · · · |
| · · · | · · · | · · · | · · · | · · · |

# FIG.6A

610

611

# FIG.6B

612    613    620

# FIG.7

```
                    ┌──────────┐
                    │  START   │
                    └────┬─────┘
                         │              S701
         ┌───────────────▼──────────────────┐
         │   SPECIFY POSITION OF DEVICE ITSELF   │
         └───────────────┬──────────────────┘
                         │              S702
         ┌───────────────▼──────────────────┐
         │      ACQUIRE REGION INFORMATION OF      │
         │   MULTIPLE REGIONS AROUND THE DEVICE    │
         └───────────────┬──────────────────┘
                         │              S703
         ┌───────────────▼──────────────────┐
         │        DETERMINE PRIORITIES         │
         │        OF MULTIPLE REGIONS          │
         └───────────────┬──────────────────┘
                         │              S704
         ┌───────────────▼──────────────────┐
         │       ACQUIRE MAP INFORMATION IN        │
         │   ORDER FROM A HIGHER PRIORITY REGION   │
         └───────────────┬──────────────────┘
                         │              S705
         ┌───────────────▼──────────────────┐
         │      COMBINE MAP IMAGES INCLUDED        │
         │       IN ACQUIRED MAP INFORMATION       │
         └───────────────┬──────────────────┘
                         │              S706
         ┌───────────────▼──────────────────┐
         │        PERFORM MAP MATCHING         │
         └───────────────┬──────────────────┘
                         │              S707
         ┌───────────────▼──────────────────┐
         │   DELETE UNNECESSARY MAP INFORMATION    │
         └───────────────┬──────────────────┘
                         │
                    ┌────▼─────┐
                    │   END    │
                    └──────────┘
```

# FIG.8

```
            ┌─────────────┐
            │    START    │
            └─────────────┘
                   │
                   ▼                          S801
   ┌─────────────────────────────────────────────┐
   │        ADD FIRST SCORE TO REGION            │
   │       ADJACENT TO CURRENT POSITION          │
   └─────────────────────────────────────────────┘
                   │
                   ▼                          S802
   ┌─────────────────────────────────────────────┐
   │      ADD SECOND SCORE TO REGION WHERE       │
   │       COMMUNICATION IS UNAVAILABLE          │
   └─────────────────────────────────────────────┘
                   │
                   ▼                          S803
   ┌─────────────────────────────────────────────┐
   │            ADD THIRD SCORE TO               │
   │         SERVICE PROVIDING REGION            │
   └─────────────────────────────────────────────┘
                   │
                   ▼                          S804
   ┌─────────────────────────────────────────────┐
   │   DETERMINE SCORE ADDED TO EACH REGION      │
   │   TO BE PRIORITY OF CORRESPONDING REGION    │
   └─────────────────────────────────────────────┘
                   │
                   ▼
            ┌─────────────┐
            │     END     │
            └─────────────┘
```

FIG.9

| | | | | | | |
|---|---|---|---|---|---|---|
| COMMUNI-CATION UNAVAILABLE REGION 2+8 | COMMUNI-CATION UNAVAILABLE REGION 2+8 | 2 | 2 | 2 | 2 | 2 |
| 2 | 2 | 2 | 2 | 2 | 2 | 2 |
| 2 | 2 | ADJACENT REGION 10+2 | ADJACENT REGION 10+2 | ADJACENT REGION 10+2 | 2 | 2 |
| 2 | 2 | ADJACENT REGION 10+2 | CURRENT POSITION | ADJACENT REGION 10+2 | 2 | 2 |
| 2 | 2 | ADJACENT REGION 10+2 | ADJACENT REGION 10+2 | ADJACENT REGION 10+2 | 2 | 2 |
| NON-PROVIDING REGION 0 | 2 | 2 | 2 | 2 | 2 | 2 |
| NON-PROVIDING REGION 0 | 2 | 2 | 2 | 2 | 2 | 2 |

900
904
903
901
902

FIG.10

# FIG.11

START

S1101

ACQUIRE DETECTION INFORMATION
INDICATING CURRENT POSITION

S1102

DOES MAP
MATCHING PROCESS NEED TO BE
INITIALIZED?

NO

YES

S1103

INITIALIZE STATE OF MAP MATCHING

S1104

MOVE EACH PARTICLE USING DETECTION
INFORMATION AND STATE EQUATION

S1105

DETERMINE WEIGHT OF EACH PARTICLE BASED
ON MAP IMAGE AND POSITION OF PARTICLE

S1106

ESTIMATE CURRENT POSITION BY
WEIGHTED MEAN OF EACH PARTICLE,
AND OUTPUT ESTIMATED POSITION
AS POSITION INFORMATION

S1107

RESAMPLE PARTICLES WITH WEIGHT "0"

END

FIG.12

# FIG.13

POSITION ESTIMATION DEVICE — 110

POSITION DETECTOR — 414

INITIALIZER — 419

OUTPUT PROCESSOR — 420

MAP MATCHING UNIT — 418

MAP INFORMATION STORAGE UNIT — 417

MAP INFORMATION REQUEST UNIT — 1301

COMMUNICATION CONTROLLER — 411

1400

POSITION INFORMATION SERVER — 120

REGION INFORMATION ACQUISITION UNIT — 412

PRIORITY DETERMINER — 415

MAP INFORMATION ACQUISITION UNIT — 416

INFORMATION PROVIDER — 432

COMMUNICATION CONTROLLER — 431

APPLICATION INFORMATION MANAGEMENT DB — 434

REGION INFORMATION DB — 435

MAP INFORMATION DB — 436

INFORMATION MANAGER — 433

EP 3 425 339 A1

FIG.14

110

| POSITION ESTIMATION DEVICE | POSITION INFORMATION SERVER | 120 |

414 POSITION DETECTOR
1301 MAP INFOR-MATION RE-QUEST UNIT
432 INFORMA-TION PROVIDER
412 REGION INFOR-MATION AC-QUISITION UNIT
415 PRIORITY DETERMINER
416 MAP INFORMA-TION ACQUISI-TION UNIT

S1401 DETECT CURRENT POSITION

DETECTION INFORMATION
S1402

MAP INFORMATION ACQUISITION REQUEST (APPLICATION ID, DETECTION INFORMATION)
S1403

S1404 VERIFY APPLICATION ID

REQUEST INFORMATION (DETECTION INFORMATION, SERVICE INFORMATION)
S1405

S1406 ACQUIRE REGION INFORMATION BASED ON DETECTION INFORMATION AND SERVICE INFORMATION

REQUEST INFORMATION (DETECTION INFORMATION, SERVICE INFORMATION, REGION INFORMATION)
S1407

S1408 DETERMINE PRIORITIES OF REGIONS

REQUEST INFORMATION (REGION INFORMATION, PRIORITY INFORMATION)
S1409

S1410 ACQUIRE MAP IN-FORMATION

MAP INFORMATION
MAP INFORMATION
S1411

MAP INFORMATION
S1412

S1413
STORE MAP INFORMATION IN MAP INFORMATION STORAGE UNIT

# FIG.15A

```
                    ( START )
                        │
                        ▼                    ╭S801
┌───────────────────────────────────────────┐
│         ADD FIRST SCORE TO REGION          │
│       ADJACENT TO CURRENT POSITION         │
└───────────────────────────────────────────┘
                        │
                        ▼                    ╭S802
┌───────────────────────────────────────────┐
│       ADD SECOND SCORE TO REGION WHERE     │
│        COMMUNICATION IS UNAVAILABLE        │
└───────────────────────────────────────────┘
                        │
                        ▼                    ╭S803
┌───────────────────────────────────────────┐
│            ADD THIRD SCORE TO              │
│        SERVICE PROVIDING REGION            │
└───────────────────────────────────────────┘
                        │
                        ▼                    ╭S1501
┌───────────────────────────────────────────┐
│         ADD POINTS TO EACH REGION          │
│      ACCORDING TO "DATA SIZE" OF MAP       │
└───────────────────────────────────────────┘
                        │
                        ▼                    ╭S804
┌───────────────────────────────────────────┐
│    DETERMINE SCORE ADDED TO EACH REGION    │
│  TO BE PRIORITY OF CORRESPONDING REGION    │
└───────────────────────────────────────────┘
                        │
                        ▼
                    ( END )
```

# FIG.15B

| DATA SIZE | SCORE |
|-----------|-------|
| XX MB OR MORE | 3 |
| LESS THAN XX MB | 0 |

FIG.16

900

| | | | | | | |
|---|---|---|---|---|---|---|
| COMMUNI-CATION UNAVAILABLE REGION 2+8 | COMMUNI-CATION UNAVAILABLE REGION 2+8 | 2 | 2 | 2 | 2 | 2 |
| 2 | 2 | 2 | 2 | 2 | 2 | 2 |
| 2 | 2 | ADJACENT REGION 10+2 | ADJACENT REGION 10+2 | ADJACENT REGION 10+2 | 2 | 2 |
| 2 | 2 | ADJACENT REGION 10+2 | CURRENT POSITION | ADJACENT REGION 10+2 | 2 | 2 |
| 2 | 2 | ADJACENT REGION 10+2 | ADJACENT REGION 10+2 | ADJACENT REGION 10+2 | 2 | 2 |
| NON-PROVIDING REGION 0 | 2 | 2 | 2 | 2 | 2 | 2 |
| NON-PROVIDING REGION 0 | 2 | 2 | REGION WITH MAP SIZE OF THRESHOLD OR MORE 2+3 | REGION WITH MAP SIZE OF THRESHOLD OR MORE 2+3 | REGION WITH MAP SIZE OF THRESHOLD OR MORE 2+3 | REGION WITH MAP SIZE OF THRESHOLD OR MORE 2+3 |

901

1601

34

# FIG.17A

| | | | 1702 | | | 900 |
|---|---|---|---|---|---|---|
| COMMUNI-CATION UNAVAILABLE REGION 2+8 | COMMUNI-CATION UNAVAILABLE REGION 2+8 | 2+2 | 2+2 | 2+2 | 2 | 2 |
| 2 | 2 | 2+2 | 2+2 | 2+2 | 2 | 2 |
| 2 | 2 | ADJACENT REGION 2+10 | ADJACENT REGION 2+10 | ADJACENT REGION 2+10 | 2 | 2 |
| 2 | 2 | ADJACENT REGION 2+10 | CURRENT POSITION | ADJACENT REGION 2+10 | 2 | 2 |
| 2 | 2 | ADJACENT REGION 2+10 | ADJACENT REGION 2+10 | ADJACENT REGION 2+10 | 2 | 2 |
| NON-PROVIDING REGION 0 | 2 | 2 | 2 | 2 | 2 | 2 |
| NON-PROVIDING REGION 0 | 2 | 2 | 2 | 2 | 2 | 2 |

1701
901

FIG.17B

1703

900

| 0 | 0 | 0 | 0 | 0 | 0 | 0 |
|---|---|---|---|---|---|---|
| 0 | 2 | 2 | 2 | 2 | 2 | 0 |
| 0 | 2 | ADJACENT REGION 2+10 | ADJACENT REGION 2+10 | ADJACENT REGION 2+10 | 2 | 0 |
| 0 | 2 | ADJACENT REGION 2+10 | CURRENT POSITION | ADJACENT REGION 2+10 | 2 | 0 |
| 0 | 2 | ADJACENT REGION 2+10 | ADJACENT REGION 2+10 | ADJACENT REGION 2+10 | 2 | 0 |
| 0 | 2 | 2 | 2 | 2 | 2 | 0 |
| 0 | 0 | 0 | 0 | 0 | 0 | 0 |

901

## INTERNATIONAL SEARCH REPORT

| International application No. |
|---|
| PCT/JP2017/005165 |

### A. CLASSIFICATION OF SUBJECT MATTER
*G01C21/30(2006.01)i*

According to International Patent Classification (IPC) or to both national classification and IPC

### B. FIELDS SEARCHED

Minimum documentation searched (classification system followed by classification symbols)
G01C21/30

Documentation searched other than minimum documentation to the extent that such documents are included in the fields searched
Jitsuyo Shinan Koho          1922-1996    Jitsuyo Shinan Toroku Koho    1996-2017
Kokai Jitsuyo Shinan Koho    1971-2017    Toroku Jitsuyo Shinan Koho    1994-2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2012-132691 A  (Clarion Co., Ltd.),<br>12 July 2012 (12.07.2012),<br>paragraphs [0023], [0034] to [0038], [0051]<br>to [0053], [0062], [0071], [0081] to [0087],<br>[0108], [0110]; fig. 1 to 4<br>(Family: none) | 1,4-6,9,<br>13-15<br>2-3,7-8,<br>10-12 |
| Y | JP 2003-35544 A  (Hitachi, Ltd.),<br>07 February 2003 (07.02.2003),<br>paragraphs [0021], [0030] to [0032], [0040];<br>fig. 1 to 4<br>(Family: none) | 2-3,7-8 |
| Y | JP 2011-69666 A  (Toshiba Corp.),<br>07 April 2011 (07.04.2011),<br>paragraphs [0042] to [0043], [0049]<br>(Family: none) | 3,7-8 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 April 2017 (25.04.17) | 16 May 2017 (16.05.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2017/005165

C (Continuation). DOCUMENTS CONSIDERED TO BE RELEVANT

| Category* | Citation of document, with indication, where appropriate, of the relevant passages | Relevant to claim No. |
|---|---|---|
| Y | JP 7-64631 A (Nissan Motor Co., Ltd.), 10 March 1995 (10.03.1995), paragraph [0050] (Family: none) | 7-8 |
| Y | JP 2014-167461 A (Ricoh Co., Ltd.), 11 September 2014 (11.09.2014), paragraph [0178] & US 2015/0330791 A1 paragraph [0207] & WO 2014/119801 A1 & EP 2951529 A1 & TW 201439542 A & CN 104969030 A & KR 10-2015-0099864 A | 10-12 |
| Y | JP 9-280877 A (Matsushita Electric Industrial Co., Ltd.), 31 October 1997 (31.10.1997), paragraphs [0021], [0069] to [0071]; fig. 6 (Family: none) | 11-12 |
| A | US 2009/0177390 A1 (MIKUSIAK Lubos), 09 July 2009 (09.07.2009), paragraph [0078]; fig. 8 & TW 200930980 A | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013200223 A
- JP 2016039407 A